# FASCICULE DE BREVET EUROPEEN

(11) **EP 3 423 202 B1**
(45) Date de publication et mention de la délivrance du brevet: **26.02.2020**
(21) Numéro de dépôt: 17712201.7
(22) Date de dépôt: 27.02.2017
(51) Int. Cl.: B07C 5/342

(54) **MACHINE ET PROCÉDÉ D'INSPECTION D'OBJETS DÉFILANT EN FLUX**
INSPEKTIONSMMASCHINE UND VERFAHREN FÜR SICH IN EINEM MATERIALFLUSS BEWEGENDE OBJEKTE
INSPECTION MACHINE AND METHOD FOR OBJECTS PASSING IN A STREAM

(30) Priorité: 01.03.2016 FR 1651728
(43) Date de publication de la demande: 09.01.2019
(73) Titulaire: Pellenc Selective Technologies Société par actions simplifée, 84120 Pertuis (FR)
(72) Inventeur: BOURELY, Antoine, 84240 La Tour D'aigues (FR); LE CORRE, Gwénaële, 84120 Pertuis (FR)
(74) Mandataire: Cabinet Nuss
(86) Numéro de dépôt international: PCT/FR2017/050432
(87) Numéro de publication internationale: WO 2017/149230

(56) Documents cités:
- EP-A1- 1 243 350
- EP-A1- 1 533 045
- US-A1- 2002 008 055

## Description

La présente invention concerne le domaine de la caractérisation automatique, et éventuellement de la classification, du tri, de l'évaluation ou de l'identification d'objets ou d'articles, ou de parties de ces derniers, défilant en flux, sous forme d'éléments individuels et séparés ou d'un produit d'un seul tenant défilant sur un plan de convoyage. La caractérisation non destructive est réalisée par analyse de rayonnements lumineux réfléchis par les objets, articles ou produits soumis à des rayonnements incidents correspondants. Une application avantageuse, mais non limitative, de ce type de technologie dit de "tri optique" est le tri de déchets ménagers, collectifs ou industriels, en particulier d'emballages ménagers recyclables.

Dans ce contexte, l'invention propose une machine et un procédé d'inspection améliorés pour réaliser une caractérisation automatique.

De nombreuses réalisations de machines et de procédés de tri optique sont déjà connues, commercialisées et mises en œuvre.

En ce qui concerne tout d'abord la nature des rayonnements incidents ou d'inspection utilisés, il convient de relever que la technologie considérée et mise en œuvre repose sur l'émission de rayonnements non cohérents et à large spectre. De ce fait, les machines et systèmes pris en compte dans l'état de la technique utilisent tous des sources d'éclairage thermique de type tungstène-halogène, appelés plus simplement "halogènes", et non des lasers ou des diodes électroluminescentes. Les halogènes ont une composition spectrale maitrisée, qui ne dépend que de la température de couleur, et leur spectre couvre bien les domaines principaux du tri optique : de 400 nm à 2 500 nm. Les autres systèmes, et en particulier les lasers, autorisent un excellent contrôle de la géométrie d'éclairage, mais ils sont nettement plus chers et plus complexes à maitriser, ce qui en fait des solutions rarement utilisées pour le tri optique.

Dans un trieur optique, les organes de détection et d'éclairage sont normalement situés à des distances importantes des flux à trier, de 300 mm à 2 000 mm. En effet, l'expérience montre que 300 mm est la hauteur nécessaire du couloir de passage d'un flux de déchets à trier, si on veut éviter les risques de bourrage (coincement d'objets dans la machine, ce qui déclenche une alerte bloquante et un arrêt du tri). Quant aux grandes dimensions (jusqu'à 2 000 mm), elles correspondent à la nécessité de balayer avec un seul dispositif une grande largeur de convoyeur.

La notion de bilan optique est donc importante pour assurer un bon rapport signal sur bruit, et donc une bonne détection en temps réel.

Pour améliorer le bilan, une solution évidente peut consister à maximiser la proportion de photons émis qui servent effectivement à la détection, ce qu'on pourrait appeler "l'efficacité photonique".

Dans cette perspective, c'est la coïncidence des zones de détection et des zones d'éclairage qui apparait comme la solution optimale : tous les photons captés depuis la ligne d'éclairage sont collectés et exploités par les capteurs, et les capteurs eux-mêmes sont utilisés sur toute leur surface.

Toutefois, la plupart des systèmes connus ne s'approchent pas d'une telle coïncidence, en particulier du fait de la difficulté de sa mise en œuvre pratique, compte tenu des tolérances de fabrication et d'utilisation notamment.

L'architecture traditionnelle des trieurs optiques connus utilise des éclairages diffus présentant un angle important avec le plan de détection. Ils sont très employés car ils sont faciles à réaliser et présentent une bonne variété d'orientations pour l'éclairage des objets, ce qui est favorable.

Cependant, ils sont confrontés au problème de la profondeur de champ, pour pouvoir analyser des objets d'une certaine épaisseur. Il leur faut donc éclairer non seulement la ligne de détection au niveau du tapis, mais aussi toutes les lignes de détection situées dans le plan de détection et au-dessus du tapis. Cela implique qu'à chaque hauteur, une faible proportion de la zone éclairée est dans le champ des capteurs.

Pour l'efficacité photonique, un éclairage mobile, tel que celui décrit dans la demande de brevet WO 2013/115650 A1, parait plus intéressant, car l'éclairage est dans ce cas directionnel, mobile et coaxial avec la détection. Ce montage assure par principe une bonne sobriété énergétique, puisqu'on n'éclaire à tout instant que le voisinage du pixel en cours d'analyse.

Cependant, dans ce montage connu, l'éclairage est également débordant. Les faisceaux de deux lampes, focalisés par une simple lentille et renvoyés par un miroir polygonal, donnent au niveau du tapis un spot de diamètre proche de 8 cm, largement plus grand que le pixel. De plus, l'éclairage mobile coaxial présente un inconvénient majeur qui limite son intérêt : sur des objets transparents, comme des sacs ou des bouteilles plastiques, très peu de signal est renvoyé à 180° de la direction d'éclairage, ce qui compromet complètement la qualité de la détection.

Plus généralement, tout montage à éclairage mobile, basé sur une source incohérente comme une lampe halogène, a de grandes difficultés à concentrer la lumière sur une zone réduite, donc à améliorer le bilan optique.

Seuls les montages à fibre optique parviennent à un bon confinement de l'éclairage, mais à seulement quelques millimètres de la scène, ce qui les rend inutilisables en tri optique. Dans cette catégorie, on trouve les systèmes de détection SRS, ou Spectroscopie Résolue Spatialement.

Parmi les éclairages fixes fonctionnant à grande distance de la scène, seuls les éclairages sensiblement coplanaires avec la détection, ou colinéaires (coaxiaux), peuvent espérer confiner l'éclairage. Or, comme indiqué précédemment, il est très difficile de concevoir un éclairage colinéaire de ce type, qui ne soit pas à base de lumière cohérente.

La mise en œuvre d'un éclairage et d'une détection sensiblement coplanaires est divulguée par le document EP 1 243 350 et par les documents commerciaux de la demanderesse relatifs à sa gamme de machines dénommée "Mistral".

Outre la disposition pratique concernant la coplanéité, les principales autres caractéristiques et le mode de fonctionnement de la machine objet du document précité sont indiqués ci-après.

Cette machine connue est destinée principalement au tri optique d'objets divers, et notamment de déchets en vue de leur recyclage.

Lesdits objets à trier sont étalés en vrac monocouche sur un tapis convoyeur, dont la largeur est généralement comprise entre 600 mm et 3 000 mm, et dont la vitesse est fixe, et comprise entre 2 m/s et 5 m/s.

Une ou plusieurs têtes optiques sont placées côte à côte au-dessus du convoyeur et inspectent par lignes successives la totalité de sa surface pendant son défilement.

Un éclairage focalisé définit un plan d'éclairage dont l'intersection avec le tapis définit une ligne d'éclairage, et concentre la majorité du rayonnement dans une zone d'éclairage focalisé située au voisinage immédiat de la ligne d'éclairage.

Pour chaque tête optique, un scanner de type miroir oscillant fait balayer un point de mesure d'un bord à l'autre de la partie de la ligne d'éclairage correspondant au champ de vision de la tête. La période d'analyse d'une ligne, correspondant à un balayage transversal, est de quelques millisecondes.

A tout instant, une seule zone de mesure élémentaire située au voisinage du point balayé est visualisée et analysée et la surface de la zone visualisée pendant une mesure élémentaire est appelée pixel. Le nombre de pixels analysés par ligne est ajusté en fonction de la largeur balayée pour aboutir à une résolution latérale de quelques millimètres, préférentiellement de 5 mm à 10 mm.

La lumière reçue du pixel en cours d'analyse est renvoyée par le scanner dans un élément focalisant et injectée dans des fibres optiques en vue de sa transmission dans un spectromètre pour analyse et évaluation.

La lumière reçue du pixel est décomposée en ses longueurs d'onde constitutives dans un spectromètre à réseau de diffraction et les données spectrales sont utilisées pour classer les produits à des fins d'inspection ou de tri, en combinant les informations matière et couleurs extraites du signal récupéré.

Pour ce faire, deux jeux de fibres optiques, qui amènent l'information à traiter et issus du signal à différents analyseurs, sont utilisés, à savoir :
- un jeu de fibres qui alimente un spectromètre proche infrarouge, pour déterminer la composition chimique ;
- un autre jeu de fibres qui alimente un ensemble de capteurs pour déterminer la couleur grâce à trois filtres correspondant aux couleurs de base rouge, vert et bleu (système RVB).

Bien que cette machine existante, correspondant sensiblement à l'objet du document EP 1 243 350 précité, donne satisfaction, il existe une demande persistante d'amélioration de différents points, à savoir :
- une réduction des besoins d'éclairage ;
- une meilleure stabilité spatiale de la zone analysée, qui garantit la qualité géométrique des images globales reconstruites, ainsi que la maitrise des taux de couverture du tapis convoyeur formant le plan de convoyage;
- une meilleure stabilité spectrale des mesures malgré les défauts liés aux tolérances de fabrication des dispositifs d'analyse, tels que les spectromètres ;
- une combinaison optimisée des informations en cas de mise en œuvre d'au moins deux dispositifs d'analyse distincts.

La présente invention a pour but essentiel d'améliorer une machine du type divulgué par le document EP 1 243 350 en vue de répondre au moins en partie à la demande précitée.

A cet effet, l'invention a pour objet une machine d'inspection automatique d'objets individuels, arrangés de façon sensiblement monocouche, d'un produit surfacique d'un seul tenant ou de produits particulaires répartis en une couche sensiblement continue, défilant en flux sur un plan de convoyage, ladite machine étant, d'une part, apte et destinée à réaliser une discrimination des objets, des produits ou de zones d'un produit surfacique selon leur composition chimique et/ou leur couleur et comportant, d'autre part, au moins un poste d'éclairage et au moins un poste de détection sous lesquels passe le flux à inspecter,
le ou chaque poste d'éclairage comprenant notamment des moyens d'application et de focalisation de rayonnements d'inspection, issus d'une ou de plusieurs source(s) incohérente(s) et à large spectre, émettant lesdits rayonnements en direction du plan de convoyage de façon à définir un plan d'éclairage, l'intersection dudit plan d'éclairage et du plan de convoyage définissant une ligne d'éclairage s'étendant transversalement à la direction de défilement du flux, ainsi qu'une zone d'éclairage focalisé en forme de bande transversale, s'étendant de part et d'autre de ladite ligne d'éclairage et dans le plan de convoyage,
le ou chaque poste de détection comprenant notamment
d'une part, un moyen de détection permettant de balayer périodiquement chaque point de la ligne d'éclairage, et recevant en permanence les rayonnements réfléchis par une zone de mesure élémentaire ou pixel s'étendant autour du point courant balayé, ce pixel mobile définissant, au cours du balayage de la ligne d'éclairage par le moyen de détection, une zone de détection en forme de bande transversale, cette zone présentant une dimension selon un axe perpendiculaire à la direction de défilement, correspondant à la largeur d'inspection du poste de détection, et
d'autre part, des moyens de collecte et de transmission du faisceau de rayonnements multispectraux réfléchis à au moins un dispositif d'analyse, relié à ou comprenant un dispositif d'évaluation, aptes et destinés à effectuer un traitement du signal contenu dans le pixel et transmis par les moyens de collecte et de transmission,
machine caractérisée en ce que la zone d'éclairage focalisée est contenue dans la zone de détection sur toute la largeur d'inspection.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 1 est une vue partielle schématique de la machine selon l'invention illustrant plus particulièrement le poste de détection ;
La figure 1A est une vue en coupe selon un plan perpendiculaire au plan de convoyage et au plan d'éclairage de l'objet représenté figure 1 ;
La figure 1B est une vue similaire à la figure 1A mais avec une focalisation de l'éclairage à une distance donnée au-dessus du plan de convoyage;
La figure 2 montre le détail des zones d'éclairage et de détection au niveau du plan de convoyage de la machine selon l'invention ;
La figure 3A illustre un montage possible de deux spectromètres faisant partie d'une variante du poste de détection de la machine de la figure 1 et la figure 3B montre la combinaison optimisée des zones de détection au niveau du plan de convoyage de ces deux spectromètres différents, selon un mode de réalisation de l'invention ;
La figure 4A montre les conséquences des instabilités spatiales des images obtenues en cas d'éclairage non confiné, alors que la figure 4B illustre la stabilité spatiale des images obtenues avec une machine selon l'invention et que la figure 4C montre la situation détaillée de la figure 4B ;
Les figures 5 et 6 montrent les perturbations possibles des spectres à cause d'imperfections optiques des spectromètres faisant partie du poste de détection selon l'invention, ces perturbations ayant été largement exagérées pour la compréhension ;
Les figures partielles 5A et 5B illustrent l'effet d'un décentrage de la zone éclairée dans le cas d'un éclairage non confiné, alors que les figures partielles 6A et 6B illustrent l'effet de ce même décentrage dans le cadre de l'invention, c'est-à-dire dans le cas d'un éclairage confiné.

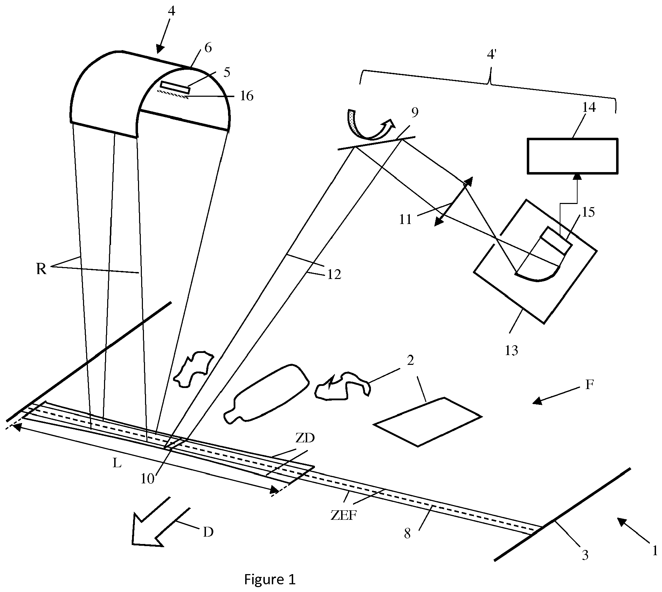

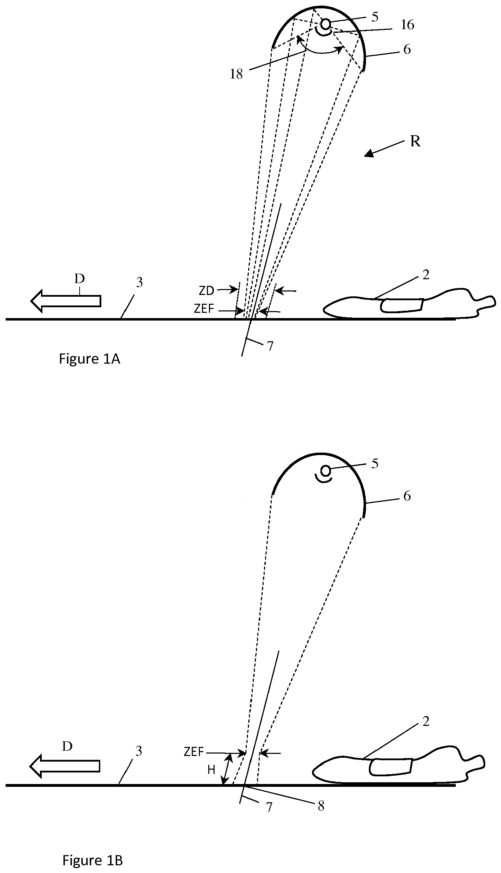

Les figures 1 et 1A illustrent en partie une machine 1 d'inspection automatique d'objets individuels 2, arrangés de façon sensiblement monocouche, d'un produit surfacique d'un seul tenant ou de produits particulaires répartis en une couche sensiblement continue, défilant en flux F sur un plan de convoyage 3, ladite machine 1 étant, d'une part, apte et destinée à réaliser une discrimination des objets, des produits ou de zones d'un produit surfacique selon leur composition chimique et/ou leur couleur et comportant, d'autre part, au moins un poste d'éclairage 4 et au moins un poste de détection 4' sous lesquels passe le flux F à inspecter.

Ce ou chaque poste d'éclairage 4 comprend notamment des moyens 6 d'application et de focalisation de rayonnements R d'inspection, issus d'une ou de plusieurs source(s) 5 incohérente(s) et à large spectre, émettant lesdits rayonnements R en direction du plan de convoyage 3 de façon à définir un plan d'éclairage 7, l'intersection dudit plan d'éclairage 7 et du plan de convoyage 3 définissant une ligne d'éclairage 8 s'étendant transversalement à la direction D de défilement du flux F, ainsi qu'une zone d'éclairage focalisé ZEF en forme de bande transversale, s'étendant de part et d'autre de ladite ligne d'éclairage 8 et dans le plan de convoyage 3.

Le ou chaque poste de détection 4' comprend quant à lui notamment :
d'une part, un moyen 9 de détection permettant de balayer périodiquement chaque point de la ligne d'éclairage 8, et recevant en permanence les rayonnements réfléchis par une zone de mesure élémentaire ou pixel 10 s'étendant autour du point courant balayé, ce pixel 10 mobile définissant, au cours du balayage de la ligne d'éclairage 8 par le moyen de détection 9, une zone de détection ZD en forme de bande transversale, cette zone ZD présentant une dimension L selon un axe perpendiculaire à la direction D de défilement, correspondant à la largeur d'inspection du poste de détection 4', et
d'autre part, des moyens 9, 11 de collecte et de transmission du faisceau 12 de rayonnements multispectraux réfléchis à au moins un dispositif d'acquisition 13, relié à un dispositif d'analyse 14, aptes et destinés à effectuer un traitement du signal contenu dans le pixel 10 et transmis par les moyens de collecte et de transmission 9, 11.

Conformément à l'invention, cette machine 1 est caractérisée en ce que la zone d'éclairage focalisée ZEF est contenue, c'est-à-dire préférentiellement strictement comprise, dans la zone de détection ZD sur toute la largeur L.

Toujours en accord avec l'invention, il est prévu que le pixel mobile balayant 10 présente une extension déterminée dans la direction D de l'axe de défilement du flux F, avec des limites ou bords amont et aval 10', et en ce que les moyens 5, 6 d'application et de focalisation sont configurés pour réaliser un confinement de l'éclairage tel que, pendant tout le déplacement du pixel mobile 10 sur ou au voisinage du plan de convoyage 3, les limites ou bords amont et aval de la zone d'éclairage ZEF selon la direction D de défilement sont toujours contenu(e)s à l'intérieur des limites ou bords amont et aval 10' dudit pixel 10 dans ladite direction D de défilement.

Grâce aux dispositions précitées de l'invention, qui prennent le contre-pied de l'éclairage débordant préconisé par l'état de la technique, l'homme du métier comprend qu'en plus de la réduction de la puissance d'éclairage résultant de leur mise en œuvre, il est également possible de garantir la bonne stabilité spatiale et spectrale de la zone analysée, ainsi qu'une obtention aisée de la concordance entre plusieurs dispositifs d'acquisition et d'analyse du type spectromètre, comme indiqué ci-après plus en détails.

Préférentiellement, les deux zones ZEF et ZD sont toutes deux sensiblement centrées sur le plan d'éclairage 7, et donc par rapport à la ligne d'éclairage 8.

Egalement en accord avec une variante constructive avantageuse de l'invention, aboutissant à la suppression de tout moyen ou support de transmission matériel du faisceau 12 de rayonnements réfléchis et collectés, tel qu'un faisceau de fibres optiques mis en œuvre dans l'état de la technique, la forme du pixel mobile balayant 10 est déterminée par la forme des capteurs ou de l'arrangement de capteurs 15 faisant partie dudit au moins un dispositif 13, 14 d'acquisition et d'analyse et/ou par la forme de l'ouverture 13' d'admission de rayonnements réfléchis du dispositif 13 comprenant ces capteurs 15, ledit pixel 10 présentant préférentiellement une forme rectangulaire allongée dans la direction D de défilement.

De manière préférée et pour conserver une exploitation performante du dispositif d'analyse, tout en garantissant les avantages précités d'un éclairage confiné selon l'invention, il est prévu que la zone éclairée 10" du pixel mobile 10 pendant son déplacement de balayage le long de la ligne d'éclairage 8, c'est-à-dire sa surface commune avec la zone d'éclairage focalisée ZEF, représente moins de 80 % de la superficie totale dudit pixel 10, et avantageusement au moins 30 %, préférentiellement au moins 40 %, de cette superficie. Un taux compris entre 60 % et 80 % est préféré, 70 % semblant être une valeur sensiblement optimale pour la plupart des cas.

En vue d'optimiser davantage encore les performances de la machine en termes d'éclairage et de réduire, voire de supprimer, les interférences ou nuisances sur cet aspect, les moyens d'application et de focalisation comprennent préférentiellement des moyens 6 de réflexion et de confinement des rayonnements issus de la ou des source(s) 5, ainsi que des moyens 16 d'arrêt des rayonnements émis directement par cette ou ces source(s) vers ledit plan de convoyage 3 et situés dans un secteur angulaire 18 déterminé, de sorte que la totalité des rayonnements R reçus sur le plan de convoyage 3 passe par le moyen de focalisation 6 et aboutit dans la zone d'éclairage focalisée ZEF.

Bien entendu, ces moyens 5, 6 et 16 peuvent être soit unitaires, soit modulaires, soit partiellement modulaires et unitaires.

En fonction de la nature de l'inspection, de l'information souhaitée et/ou des produits/objets 2 à caractériser, différents modes de réglage et de fonctionnement de la machine 1 peuvent être envisagés.

Ainsi, pour pouvoir notamment garantir une couverture à 100 % du flux F défilant, la fréquence de balayage définie par le moyen 9 de détection est réglable pour pouvoir être ajustée à la vitesse de défilement du flux F de telle manière que, durant le balayage de deux lignes successives, les zones d'éclairage confiné ZEF de chacune de ces lignes éclairent sur le plan de convoyage 3 en défilement des portions en forme de bandes transversales exactement contiguës dans la direction D de défilement, de manière à analyser au moins une fois tout point du flux F défilant.

Pour une ouverture d'inspection différente de 100 %, à savoir inférieure ou supérieure à cette valeur, la fréquence de balayage définie par le moyen 9 de détection est réglable pour pouvoir être ajustée à la vitesse de défilement du flux F de telle manière que, durant le balayage de deux lignes successives, les zones d'éclairage confiné ZEF de chacune de ces lignes éclairent sur le plan de convoyage 3 en défilement des surfaces en forme de bandes transversales qui sont soit séparées par une distance fixe et contrôlée, soit présentent un recouvrement sur une distance ou avec un taux fixe et contrôlé(e).

Conformément à une variante constructive préférée de la machine 1, le moyen de détection 9 et les moyens 9, 11 de collecte et de transmission font partie d'un même arrangement optique correspondant à un poste de détection 4' et comprenant, d'une part, un miroir scanner 9 et au moins un élément focalisant 11 et configuré, d'autre part, pour collecter et transmettre l'image présente dans le pixel 10 à au moins un dispositif 13, 14 d'acquisition et d'analyse, avantageusement à travers une ouverture d'admission 13' en forme de fente rectangulaire.

La figure 1 ne représente qu'une partie ou un module du poste d'éclairage 4 unique fournissant une zone d'éclairage confiné ZEF préférentiellement sur toute la largeur du plan de convoyage 3. Lorsque plusieurs modules d'éclairage sont prévus, ceux-ci sont bien entendu alignés entre eux avec aboutement dans une direction perpendiculaire à D.

De même, la figure 1 ne montre, par simplicité, qu'un poste de détection 4' sur les deux postes que présente la machine 1 représentée partiellement sur cette figure 1. Le deuxième poste 4', non représenté mais identique à celui représenté, présente une zone de détection alignée avec aboutement avec la zone 2D représentée et s'étendant sur la partie transversale restante du plan de convoyage 3. Bien entendu, les deux postes de détection 4' sont alignés sur le poste d'éclairage 4, ou vice versa.

Avantageusement, le miroir scanner 9 est un miroir polygonal multifacettes rotatif, dont la vitesse de rotation est avantageusement réglable, l'élément focalisant 11 pouvant être de type réfractif, tel qu'une lentille, ou de type réfléchissant, tel qu'un miroir parabolique hors d'axe.

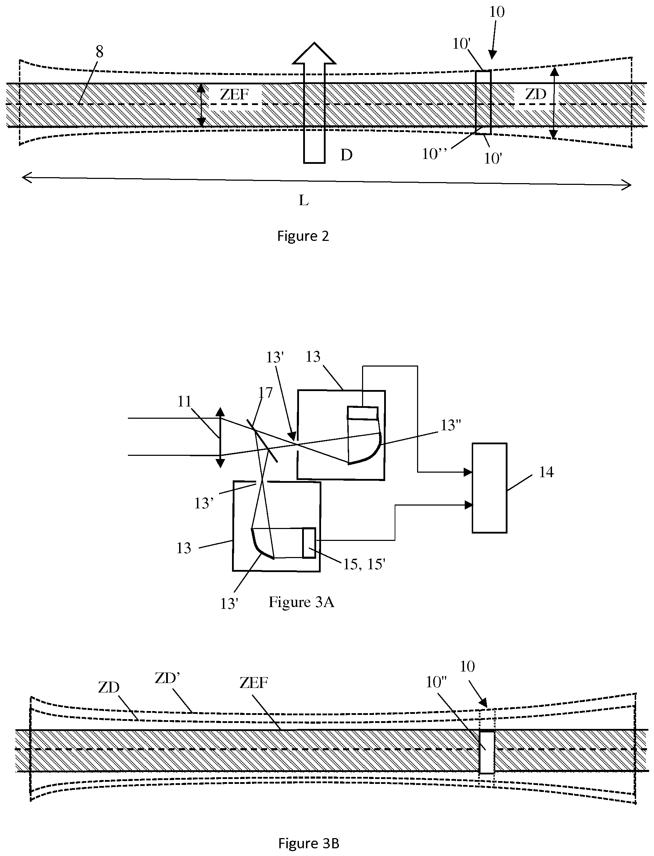

Bien que la machine 1 puisse éventuellement ne comprendre qu'un dispositif d'acquisition 13 (éventuellement un par poste d'inspection 4) pour le ou chaque faisceau 12 (figure 1), la machine 1 comprend préférentiellement au moins deux dispositifs d'acquisition 13 distincts, avantageusement de type différents, tels qu'un spectromètre de type NIR pour l'analyse des rayonnements proches infrarouge et un spectromètre de type VIS pour l'analyse des rayonnements visibles, un moyen optique 17 de subdivision du faisceau lumineux 12 des rayonnements réfléchis, formant l'image contenue dans le pixel mobile balayant 10 (ce dernier définissant la partie utile dudit faisceau 12), en plusieurs faisceaux secondaires dirigés chacun vers un des dispositifs d'acquisition 13, par exemple du type filtre dichroïque (figure 3A).

Alors que la machine 1 ne comporte qu'un poste d'éclairage 4, éventuellement à structure modulaire, il est évident que la machine 1 peut comporter un unique poste de détection 4' ou plusieurs tels postes, dont les largeurs L d'inspection s'additionnent.

Dans ce dernier cas, le moyen de détection 9, les moyens 9, 11 de collecte et de transmission et ledit au moins un dispositif d'acquisition 13 et éventuellement d'analyse 14 peuvent être regroupés en une unité structurelle et fonctionnelle formant une tête de détection modulaire et correspondant à un poste de détection 4'.

De plus, en cas de pluralité de postes de détection 4', chacun peut comporter deux spectromètres 13 différents.

Afin d'optimiser l'éclairage pour favoriser la détection et comme le montre la figure 1B, les moyens d'application et de focalisation 5, 6 des rayonnements R sous forme d'éclairage confiné selon l'invention peuvent être arrangés, configurés et dimensionnés de telle manière que la ligne de focalisation des rayonnements confinés incidents R, faisant partie du plan d'éclairage 7, soit située à une distance H déterminée au-dessus du plan de convoyage 3, cette distance pouvant notamment être fonction de la taille moyenne des objets 2 à inspecter ou de l'épaisseur de la couche de produit(s) défilant(s).

On notera que la projection selon la direction du plan de détection sur le plan de convoyage 3 de cette ligne de focalisation correspond normalement à la ligne d'éclairage 8.

L'invention a également pour objet un procédé d'inspection automatique d'objets individuels 2, arrangés de façon sensiblement monocouche, d'un produit surfacique d'un seul tenant ou de produits particulaires répartis en une couche sensiblement continue, défilant en flux F sur un plan de convoyage 3, ledit procédé étant apte et destiné à réaliser une discrimination des objets, des produits ou de zones d'un produit surfacique selon leur composition chimique et/ou leur couleur et mettant en œuvre au moins un poste d'éclairage 4 et au moins un poste de détection 4' sous lesquels passe le flux F à inspecter.

Ce procédé consiste essentiellement à :
émettre, par l'intermédiaire de moyens 6 d'application et de focalisation, des rayonnements R d'inspection, issus d'une ou de plusieurs source(s) 5 incohérente(s) et à large spectre, ce en direction du plan de convoyage 3 de façon à définir un plan d'éclairage 7, l'intersection dudit plan d'éclairage 7 et du plan de convoyage 3 définissant une ligne d'éclairage 8 s'étendant transversalement à la direction D de défilement du flux F, et créant une zone d'éclairage focalisé ZEF en forme de bande transversale, s'étendant de part et d'autre de ladite ligne d'éclairage 8 et dans le plan de convoyage 3,
à balayer, avec un moyen 9 de détection, périodiquement chaque point de la ligne d'éclairage 8, et à récupérer en permanence les rayonnements réfléchis par une zone de mesure élémentaire ou pixel 10 s'étendant autour du point courant balayé, ce pixel 10 mobile définissant, au cours du balayage de la ligne d'éclairage 8 par le moyen de détection 9, une zone de détection ZD en forme de bande transversale, cette zone ZD présentant une dimension L selon un axe perpendiculaire à la direction D de défilement, correspondant à la largeur d'inspection,
à collecter le faisceau 12 de rayonnements multispectraux réfléchis et à le transmettre à au moins un dispositif d'acquisition 13, relié à un dispositif d'analyse 14, par l'intermédiaire de moyens 9, 11 adaptés, et
à effectuer séquentiellement et répétitivement un traitement du signal contenu dans le pixel 10 et transmis par les moyens de collecte et de transmission 9, 11,
les différents moyens 5, 6, 9, 11, 13, 14 faisant tous partie d'au moins un poste de détection 4' ou d'au moins un poste d'éclairage 4 respectivement.

Ce procédé est caractérisé en ce que, durant le déroulement des différentes étapes opérationnelles précitées, la zone d'éclairage focalisée ZEF est contenue dans la zone de détection ZD sur toute la largeur d'inspection L.

Préférentiellement, le procédé précité met en œuvre une machine 1 telle que décrite précédemment et détaillée ci-après.

Une description plus détaillée de la constitution et du fonctionnement d'une variante de réalisation possible de la machine 1 selon l'invention et des avantages qu'elle présente est exposée ci-après, en relation avec les figures 1, 1A et 2 à 6.

En se référant tout d'abord aux figures 1 et 1A, on note que la machine 1 comprend au moins une source 5 de lumière thermique et multispectrale, par exemple un tube contenant un filament tungstène-halogène, qui fournit une lumière à large spectre dans les domaines visible et infrarouge proche. Un réflecteur 6 associé à la source 5 focalise tous les rayons qui l'atteignent vers une ligne d'éclairage 8 située sur le plan de convoyage 3 formé par un tapis convoyeur. Comme dans le document EP 1 243 350, la forme du réflecteur 6 est cylindro-elliptique, le filament du tube 5 est placé à l'un des foyers de l'ellipse et crée au foyer opposé une image agrandie de ce filament. Cet autre foyer est situé au voisinage du tapis 3. Cette image définit au voisinage de la ligne 8 une zone d'éclairage focalisé ZEF. La zone ZEF est agrandie du grossissement apporté, par exemple de l'ordre de 10 à 25, préférentiellement de l'ordre de 15 à 20. Si par exemple ce filament a un diamètre de 1 mm et que le grossissement est de 18, la hauteur de la zone ZEF sera de 18 mm (on parle de hauteur pour les pixels et images en vue de dessus, c'est-à-dire de leur dimension dans la direction D de défilement des objets 2).

Ce sont les signaux spectraux contenus dans ces images élémentaires successivement traitées qui contiennent les informations utiles à la discrimination des produits ou objets.

Cette hauteur se maintient sur toute la largeur L d'inspection, car il n'y a pas de défocalisation sur l'axe transverse du tapis. Tant la théorie optique que les mesures effectuées par les inventeurs confirment que l'intensité d'éclairage est sensiblement homogène dans toute la zone ZEF et qu'elle s'effondre brutalement en bordure haute ou basse de ladite zone ZEF (limites amont et aval de cette zone dans la direction D de défilement du tapis 3 des objets 2).

Bien entendu, les moyens d'application et de focalisation peuvent présenter une constitution modulaire avec plusieurs ensembles [tube 5 + réflecteur 6] alignés dans la direction transversale du tapis 3.

Dans la pratique, il y a également lieu de prendre en considération l'éclairage résiduel qui ne passe pas par le réflecteur 6, c'est-à-dire l'éclairage direct, dont l'intensité d'éclairement est environ 100 fois plus faible sur le tapis 3 au voisinage de la zone ZEF. Il est possible d'occulter cet éclairage résiduel par un masque ou une pièce d'arrêt 16 situé(e) au voisinage du tube halogène 5, ou même sur le tube lui-même. La suppression de l'éclairage résiduel aboutit à concentrer la totalité des rayonnements R atteignant le tapis 3 dans la zone ZEF.

Le système de détection est, sinon structurellement du moins optiquement, centré sur la ligne d'éclairage 8. A tout instant, le faisceau de lumière 12 provenant d'une zone élémentaire 10, appelée pixel et située dans la zone ZEF, dans laquelle il se déplace en fonction du mouvement de balayage du moyen 9, par exemple un miroir scanner, est capté et redirigé par ledit moyen 9. Le mouvement rotatif du scanner 9 permet de faire balayer au pixel 10 un large champ de détection ZD s'étendant en travers du tapis convoyeur 3. Le scanner 9 peut être de type miroir oscillant ou miroir polygonal.

Le faisceau 12 dévié par le scanner 9 est focalisé par un élément focalisant 11 vers la fente d'entrée 13' d'au moins un spectromètre 13. A l'intérieur du spectromètre 13, la lumière est envoyée sur un réseau de diffraction 13" et répartie selon sa composition spectrale sur une barrette 15' comprenant plusieurs capteurs 15 de type photodiodes. Ces capteurs 15 peuvent être régulièrement espacés ou non à l'intérieur de la barrette 15'. Le signal reçu par chaque capteur 15 est amplifié puis numérisé par une électronique appropriée (non représentée). Le spectre constitué par l'ensemble des réponses des capteurs 15 est analysé en temps réel par un dispositif informatique 14 qui permet de classer la surface contenue dans le pixel 10 dans une famille de produits ou d'objets 2 à trier.

Les étapes ultérieures optionnelles comprennent un traitement d'agrégation et de formation d'images globales qui regroupent les images élémentaires des pixels 10 contigus acquis durant les balayages transversaux successifs pour définir des représentations d'objets 2 homogènes, dont on peut déterminer la surface et la forme, et que l'on peut choisir d'éjecter, de sélectionner, de catégoriser ou non. Enfin, dans le cas où le(s) poste(s) de détection 4' fait(font) partie d'une machine 1 de tri, des instructions d'éjection sont envoyées à un barreau d'électrovannes à air comprimé (faisant partie de la machine mais non représenté), situé en bout de convoyeur 3, et permettent ainsi de dévier l'objet 2 considéré de sa trajectoire de chute naturelle, soit vers le haut, soit vers le bas, dans un contenant approprié.

Pour alléger les figures 1 et 1A, on n'a pas non plus représenté la possible subdivision du faisceau de lumière 12 en deux composantes NIR (proche infrarouge) et VIS (visible), effectuée par un miroir dichroïque en amont des spectromètres. Le spectromètre 13 représenté peut donc être un spectromètre NIR ou un spectromètre VIS. Une réalisation possible d'une telle subdivision au moyen d'un filtre dichroïque est représenté figure 3A. Cette figure illustre la séparation du flux lumineux en sa composante NIR (traversante) et sa composante VIS (réfléchie). Chaque flux lumineux secondaire est focalisé, du fait d'un arrangement adapté des moyens 11 et 17, pour passer par les fentes d'entrée spécifiques 13' de chaque spectromètre 13.

A tout instant au cours d'un processus d'inspection, le pixel 10 est l'image commune de tous les capteurs 15 sur le tapis 3.

L'ensemble des positions successives du pixel 10 mobile pendant un cycle de balayage de la ligne d'éclairage 8 transversale constitue la zone de détection ZD. Avec un grossissement optique de l'ordre de 20 pour le NIR et des capteurs 15 de 1 mm de hauteur, la hauteur (ou largeur) de la zone de détection ZD est donc de 20 mm, au moins là où l'image élémentaire récupérée est nette. Là où l'image est floue, la hauteur est plus grande, par exemple jusqu'à 23 mm sur les côtés du champ de vision. Pour un pixel VIS avec un capteur 15 plus grand, par exemple 1,5 mm, la hauteur de la zone ZD est 20 x 1,5 = 30 mm pour une image nette, et jusqu'à 35 mm pour les bords du champ.

Selon l'invention, l'éclairage est confiné, c'est-à-dire que la zone ZEF est entièrement comprise dans la zone de détection ZD, ce qui implique que la hauteur de la zone ZEF, qui est constante dans ce mode de réalisation, est inférieure à celle de la zone ZD. La hauteur de la zone ZD est variable, car la focalisation du pixel 10 mobile ne peut être parfaite que pour une distance donnée, et la distance du scanner 9 au plan de convoyage 3 est variable.

Dans le cas d'une barrette de capteurs 15 multilignes, la barrette 15' peut présenter plusieurs lignes de capteurs parallèles, par exemple deux ou quatre lignes, on peut les considérer comme une ligne unique, dont la hauteur est plus importante. Selon l'invention, l'éclairage est, dans ce cas, confiné de telle manière que la hauteur totale des différentes lignes de capteurs superposées soit supérieure à celle de la zone ZEF.

La définition ci-dessus n'est strictement applicable qu'à des zones où la lumière est focalisée, que ce soit pour l'éclairage ou pour l'image des capteurs 15. Cette condition n'est vérifiée exactement que pour une seule distance, alors qu'il est prévu de détecter des objets et produits 2 ayant une certaine hauteur (taille) au-dessus du tapis 3. L'éclairage ne reste confiné que près du tapis 3, car le faisceau d'éclairage (rayonnements R incidents) est beaucoup plus ouvert que le faisceau 12 de détection. Dans le cadre d'une réalisation pratique de l'invention telle que représentée, on peut avoir des angles d'ouverture totale de 20° à 30° pour le faisceau d'éclairage R, contre moins de 3° pour le faisceau 12 de détection. La condition ne peut donc être respectée sensiblement que jusqu'à quelques centimètres de la focale, typiquement 50 mm. Néanmoins, cette hauteur suffit pour le passage de la quasi-totalité d'un flux F, surtout si les rayonnements R incidents sont focalisés 10 mm à 20 mm au-dessus du tapis 3, c'est-à-dire à la hauteur de passage de la majorité des objets ou produits 2.

Pour respecter la condition d'éclairage confiné selon l'invention, il y a lieu de prendre des mesures pratiques pour respecter des tolérances de réglage et de fonctionnement.

Par une procédure d'alignement préalable, on aligne d'abord les zones d'éclairage ZEF des différents réflecteurs 6 alignés transversalement, qui couvrent ensemble la totalité de la largeur d'inspection L, puis les zones de détection ZD du ou des arrangement(s) optique(s) 9, 11 constituant un ou plusieurs postes de détection 4'.

Par exemple, la tolérance sur la hauteur de l'image des filaments des tubes 5 est bien contrôlée, par exemple à +/- 2 mm. Il s'agit d'une tolérance de réglage : une fois réglée, la ligne d'éclairage 8 est parfaitement stable dans l'espace (préférentiellement à mieux que le millimètre).

Il y a aussi une tolérance sur la hauteur (dans la direction D) de la zone analysée ZD, notamment quand le scanner 9 est un miroir pivotant polygonal : une valeur typique est de +/- 2 mm. Le réglage garantit une fluctuation dans cette plage lors du fonctionnement. C'est surtout le changement de face réfléchissante du miroir 9 qui crée une oscillation périodique inévitable, notamment quand on utilise des faces rapportées sur un bâti fixe. Il existe une alternative consistant à construire le miroir polygonal avec une pièce monobloc usinée, mais c'est une solution peu économique.

En contrôlant ces tolérances et leur éventuel cumul, le risque qu'une partie de la hauteur éclairée ne soit pas dans la zone de détection ZD peut être extrêmement limité, voire éliminé.

Le mode de réalisation préféré du scanner 9 correspond à un miroir polygonal piloté à vitesse constante, avec un moteur asservi à la vitesse désirée (réglable). Si par exemple, le miroir 9 effectue 17 tours par seconde et qu'il comporte 10 faces, il balaye 170 lignes par seconde, soit 5,9 ms par ligne. Si le tapis avance à 3 m/s, il progresse d'environ 18 mm en une période. La hauteur à analyser (dimension de la bande d'éclairage ZEF dans la direction D - zone commune avec la bande de détection ZD) est donc idéalement de 18 mm au moins pour ne pas avoir de trou de détection. On peut ajuster la vitesse du miroir 9 pour obtenir la correspondance exacte (couverture à 100 % du flux défilant).

Cette réalisation préférée permet de gérer correctement plusieurs vitesses d'avancement du tapis 3, sans perdre de taux de couverture du tapis : par exemple 3 m/s et 4 m/s. Pour 4 m/s, il suffit de faire tourner le miroir 9 précité à 23,5 tours par seconde environ pour une couverture idéale à 100 %.

On peut aisément étendre ce raisonnement à d'autres valeurs de couverture, comme 90 % (laissant un pourcentage volontairement non couvert) ou 120 % (recouvrement volontaire) si l'utilisateur le souhaite. Le schéma précédent permet donc une gestion souple.

L'éclairage confiné selon l'invention présente de nombreux avantages exposés ci-après.

Sur la figure 2, on voit les positions respectives de la zone ZEF, de la zone de détection ZD et du pixel 10 mobile. La coïncidence des centres de ces zones sur la ligne d'éclairage 8 n'est, dans la pratique, vraie qu'en moyenne. A tout instant, la zone ZEF peut être légèrement décentrée, comme indiqué.

Tous les photons émis à partir de l'intersection de la zone ZEF et du pixel 10 (fenêtre d'inspection mobile) et dirigés vers l'élément focalisant 11 via le scanner 9 contribuent au signal capté. On réduit ainsi la puissance d'éclairage totale nécessaire dans des proportions notables.

Un éclairage couvrant (correspondance ZD = ZEF), voire débordant selon l'état de la technique, nécessiterait de prendre en compte les flous en bord de champ de détection, et aussi les tolérances de centrage du miroir scanner 9 lors de sa rotation. Pour éclairer complètement l'image des capteurs 15 avec les hypothèses ci-dessus, il faudrait alors une hauteur de 23 mm en bord de champ, plus +/- 2 mm de tolérance, soit 27 mm en tout.

Ainsi, en passant de 27 mm pour un éclairage débordant à 18 mm pour un éclairage confiné, avec la même intensité locale d'éclairage, on obtient une réduction de puissance électrique consommée de 33 %. Cette même réduction s'applique aux risques d'échauffement des objets 2 ou du plan de convoyage 3, en cas d'arrêt du tapis, de la bande de convoyage ou analogue.

Selon l'invention, même avec deux spectromètres 13 présentant des barrettes 15' de capteurs 15 de hauteurs différentes, la même hauteur est prise en compte à tout instant, à savoir celle qui est éclairée, autorisant ainsi une concordance exacte et naturelle entre plusieurs spectromètres (figure 3B).

Cette situation est illustrée sur la figure 3B, montrant une zone de détection ZD pour le NIR et une zone de détection ZD' plus grande pour le VIS. La lumière captée provient toujours de la région d'intersection du pixel 10 avec la zone ZEF. Or, cette région ou zone d'intersection est exactement la même pour les deux spectromètres, NIR et VIS. Avec les dimensions évoquées précédemment, même si l'image du pixel VIS a une hauteur de 30 mm, seuls 20 mm seront effectivement utiles. L'expérience a montré aux inventeurs l'importance de respecter cette condition pour une bonne analyse multicapteur du pixel 10, tout défaut de concordance risquant d'aboutir au rejet du pixel 10 analysé.

Cette correspondance naturelle évite un alignement très délicat entre les fentes d'entrée 13' des deux spectromètres 13 sur le même montage optique. Ces fentes 13' devraient avoir exactement la même hauteur et le même centrage si l'éclairage n'était pas confiné. En relation avec l'invention, on peut utiliser des fentes 13' relativement hautes sans compromettre la correspondance.

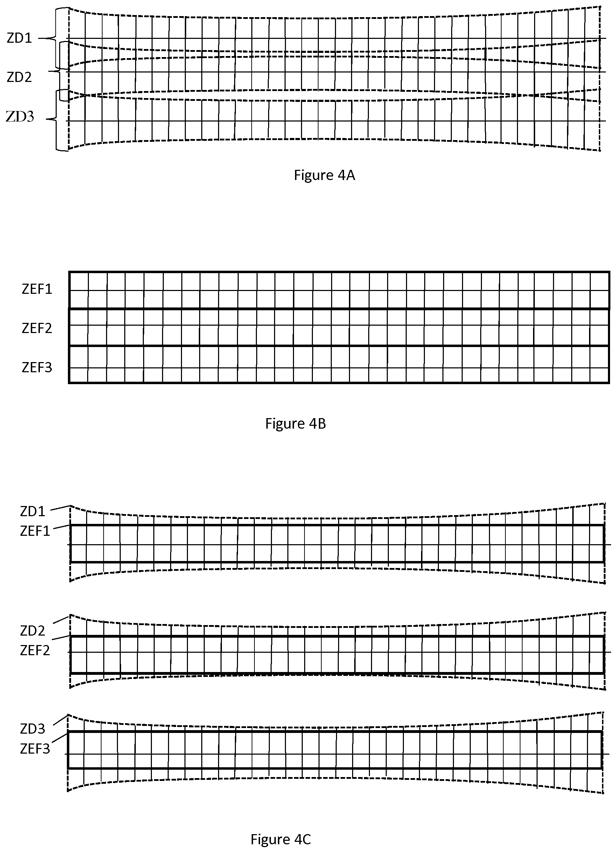

On remarque que pour les différents cas représentés aux figures 4A à 4C, le spectromètre 13 utilisé comporte deux rangées de capteurs 15 superposés, de façon à obtenir des résolutions spatiales homogènes dans les deux axes.

Avec un bon réglage des vitesses de rotation du miroir scanner pivotant 9 multifaces (polygonal) et de la vitesse du tapis 3, il y a une couverture exacte du tapis à 100 %. Par contre, avec un éclairage large et débordant selon l'état de la technique, compte tenu des tolérances de visée du miroir 9 dans l'axe de défilement (ou hauteur), la zone détectée oscillerait au gré du passage de chaque face du miroir (typiquement de +/- 2 mm), créant des recouvrements ou des trous ponctuels. Cette situation est illustrée sur la figure 4A : on y a représenté trois lignes successives, dans le cas où le spectromètre comporte deux rangées de capteurs 15 superposés. On voit que les deux lignes de capteurs du haut présentent un recouvrement qui de plus est variable et peut devenir important en bord de champ, alors que les deuxième et troisième lignes présentent entre elles un écart avec un trou de détection, bien visible au centre de la zone de champ.

Au contraire, avec une détection effective limitée par la zone ZEF qui est fixe, cette oscillation disparait (la seule autre source d'instabilité liée à l'éclairage serait une vitesse variable d'avancement du tapis, mais des variations aussi rapides de cette vitesse ne sont pas vraisemblables). Cette situation en accord avec l'invention est illustrée dans la figure 4B, où la construction de l'image bidimensionnelle par succession des trois lignes est parfaite (celles-ci sont notées ZEF1, ZEF2 et ZEF3).

Les conséquences du décentrage des zones ZD de chaque ligne sont illustrées sur la figure 4C, où les trois lignes ont été représentées séparément pour la clarté. ZEF1 est bien centrée avec sa zone de détection ZD1, ZEF2 voit sa zone de détection ZD2 décalée vers le haut et ZEF3 voit au contraire sa zone de détection ZD3 décalée vers le bas. Dans tous les cas, l'information de chaque pixel 10 provient bien de sa vraie position sur le plan de convoyage 3 (tapis, bande de convoyage), mais les surfaces éclairées relatives vues par chaque capteur 15 varient. Par exemple, la ligne inférieure de capteurs 15 dans ZD3 reçoit moins de signal que la ligne supérieure. Donc, les niveaux de signal peuvent varier, mais pas les positions dont proviennent les signaux.

Cette stabilité spatiale de la zone analysée procure de nombreux avantages évoqués ci-après.

L'absence de trou de détection est l'objectif le plus naturel. Cela peut être important pour rechercher des petits objets 2 qu'il faut absolument écarter : par exemple des gaines de fils électriques en PVC lors d'un tri de CSR (combustibles solides de récupération) ou des paillettes non PET dans un tri de paillettes plastiques. En l'absence d'éclairage confiné, un recouvrement systématique et avec un taux important est obligatoire pour éviter le risque de trous de détection.

On peut aussi souhaiter optimiser le taux de détection du tapis pour gagner en productivité. Par exemple, lorsqu'on sait que le plus petit objet recherché a 5 mm de large, on peut tolérer un trou de détection de 2 mm à 3 mm entre deux lignes ou bandes de détection ZD successives. La maitrise précise de la succession de ces lignes ou bandes permet d'optimiser ce paramètre sans prendre de marge.

Si, à l'inverse, il est souhaité par sécurité d'avoir un recouvrement de détection avec un taux de redondance contrôlé, par exemple pour analyser deux fois chaque point, on peut piloter précisément un recouvrement de moitié entre deux lignes ou bandes ZD successives.

La parfaite stabilité de l'image bidimensionnelle reconstruite par agrégation permet un meilleur traitement d'image des objets 2. La détection de contours anguleux ou arrondis n'est possible que si les lignes successives sont régulièrement espacées et les images des pixels bien alignés. Par exemple, si on visualise un objet rond, on imagine facilement que son aspect sera déformé sur l'image construite à partir de la figure 4A. Au contraire, sa forme sera bien vue sur la figure 4B.

Comme indiqué ci-après, l'utilisation d'un éclairage confiné selon l'invention a également une influence sur la stabilité spectrale de la zone analysée, notamment lorsque le recouvrement des zones d'éclairage et de détection n'est pas parfait.

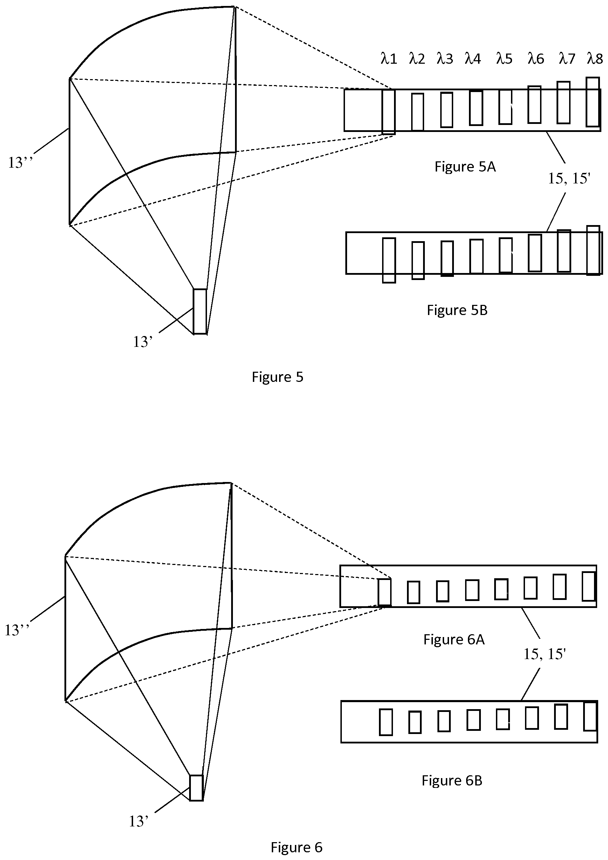

A ce sujet, on peut se référer aux figures 5 et 6 qui illustrent les différentes situations (figures 5 : sans mise en œuvre de l'invention / figures 6 : avec mise en œuvre de l'invention).

La lumière incidente est focalisée sur la fente 13', puis elle se répartit sur le réseau 13", où elle est séparée selon sa composition spectrale et refocalisée sur la barrette 15' qui contient les capteurs individuels 15 (non représentés). La lumière est séparée selon N Plages de Longueurs d'Onde (ci-après PLO). A titre d'exemple, sont représentées sur la figure 5 les images de la fente 13' pour huit PLO différentes, notées λ1 à λ8.

Le grossissement optique du système valant un, l'image de la fente 13' pour une PLO est un rectangle de mêmes dimensions que la fente 13', dans le cas d'une optique parfaite.

Pour une bonne efficacité du spectromètre 13, la fente 13' ne doit pas diaphragmer l'image des capteurs 15, et elle doit être au moins aussi haute que les capteurs 15. En supposant que c'est bien le cas, la partie éclairée sur la barrette 15' ne dépend alors que de la portion éclairée sur la fente 13' d'entrée, et cette portion éclairée est une partie de l'image de la zone ZEF au niveau du tapis 3, que l'on peut désigner par "fente éclairée". Elle peut se déplacer lors de la rotation du polygone formé par le miroir scanner pivotant 9, ou en cas de dérèglement du réflecteur 6. On ne représente sur les figures 5 et 6 que la portion éclairée de la fente 13'.

Comme tout montage physique, un spectromètre 13 comporte des imperfections d'origine, de réglage initial ou encore liées au vieillissement ou résultant des conditions d'utilisation. On peut en citer notamment deux, représentées sur les figures 5 et 6.

En raison d'une focalisation imparfaite, l'image de la fente éclairée pour une PLO peut présenter un flou, et donc être agrandie et déborder de la barrette 15'. Ce cas est représenté pour λ1, λ7, et λ8.

La barrette 15' de capteurs 15 n'est pas parfaitement parallèle à la bande de sortie : des images de PLO sont donc plus hautes à une extrémité de la bande qu'à l'autre, et les capteurs 15 correspondants risquent de ne pas être complètement éclairés. On a représenté sur les figures 6 et 7 une montée de gauche à droite de l'image des images des PLO par rapport à la barrette 15'.

Les conséquences de ce type d'imperfections sur la stabilité des spectres sont indiquées ci-après. Ce qui caractérise un spectre dans le contexte de l'invention, ce ne sont pas les valeurs absolues des luminances, mais des proportions relatives fixes entre les différentes PLO. Donc, il y aura perturbation du spectre chaque fois que la réponse d'une PLO est modifiée dans des proportions différentes des autres PLO.

Si l'image de la fente éclairée déborde d'un capteur 15, sans déborder des autres capteurs 15 dans les mêmes proportions, la composition spectrale analysée est affectée. C'est le cas sur la figure 5. Si on compare une situation centrée sur la figure 5A à une situation décentrée sur la figure 5B, on voit que les réponses λ4 et λ5 ne sont pas affectées, que λ6, λ7, et λ8 voient leur signal augmenter, alors que les signaux de λ1, λ2, et λ3 diminuent.

Au contraire, si l'éclairage est bien confiné en accord avec l'invention, c'est-à-dire que l'image de la fente éclairée sur chaque capteur 15 n'atteint pas les bords haut ou bas dudit capteur 15, tous les photons attendus sont captés. On voit sur la figure 6 que les réponses ne sont pas affectées entre les situations 6A et 6B, malgré un décentrage identique à celui représenté figure 5.

Il est clair que l'éclairage confiné évite d'affecter la composition spectrale, à condition qu'il soit confiné dans la partie centrale de chaque capteur 15, et avec des marges suffisantes.

Ces marges peuvent être avantageusement ajustées de telle manière que, tout en conservant une garantie de réalisation des conditions de stabilité précitées et de compensation des imperfections de fabrication, de construction et/ou de montage, la zone d'inspection (intersection de ZEF et de ZD) ne soit pas trop restreinte en hauteur pour éviter une baisse des performances quantitatives et qualitatives de la machine 1.

Par conséquent, la prévision selon l'invention d'une ligne ou zone d'éclairage ZEF sensiblement plus étroite que la ligne ou zone de détection ZD constitue bien la configuration la plus stable pour gérer les imperfections dues aux tolérances de fabrication et imperfections du spectromètre 13 utilisé pour l'analyse spectrale dans le cadre de la machine 1.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Machine (1) d'inspection automatique d'objets individuels (2), arrangés de façon sensiblement monocouche, d'un produit surfacique d'un seul tenant ou de produits particulaires répartis en une couche sensiblement continue, défilant en flux (F) sur un plan de convoyage (3), ladite machine (1) étant, d'une part, apte et destinée à réaliser une discrimination des objets, des produits ou de zones d'un produit surfacique selon leur composition chimique et/ou leur couleur et comportant, d'autre part, au moins un poste d'éclairage (4) et au moins un poste de détection (4') sous lesquels passe le flux (F) à inspecter,
le ou chaque poste d'éclairage (4) comprenant notamment des moyens (6) d'application et de focalisation de rayonnements (R) d'inspection, issus d'une ou de plusieurs source(s) (5) incohérente(s) et à large spectre, émettant lesdits rayonnements (R) en direction du plan de convoyage (3) de façon à définir un plan d'éclairage (7), l'intersection dudit plan d'éclairage (7) et du plan de convoyage (3) définissant une ligne d'éclairage (8) s'étendant transversalement à la direction (D) de défilement du flux (F), ainsi qu'une zone d'éclairage focalisé (ZEF) en forme de bande transversale, s'étendant de part et d'autre de ladite ligne d'éclairage (8) et dans le plan de convoyage (3),
le ou chaque poste de détection (4') comprenant notamment
d'une part, un moyen (9) de détection permettant de balayer périodiquement chaque point de la ligne d'éclairage (8), et recevant en permanence les rayonnements réfléchis par une zone de mesure élémentaire ou pixel (10) s'étendant autour du point courant balayé, ce pixel (10) mobile définissant, au cours du balayage de la ligne d'éclairage (8) par le moyen de détection (9), une zone de détection (ZD) en forme de bande transversale, cette zone (ZD) présentant une dimension (L) selon un axe perpendiculaire à la direction (D) de défilement, correspondant à la largeur d'inspection du poste de détection (4'), et
d'autre part, des moyens (9, 11) de collecte et de transmission du faisceau (12) de rayonnements multispectraux réfléchis à au moins un dispositif d'acquisition (13), relié à un dispositif d'analyse (14), aptes et destinés à effectuer un traitement du signal contenu dans le pixel (10) et transmis par les moyens de collecte et de transmission (9, 11),
machine (1) **caractérisée en ce que** la zone d'éclairage focalisée (ZEF) est contenue dans la zone de détection (ZD) sur toute la largeur (L).

2. Machine selon la revendication 1, **caractérisée en ce que** le pixel mobile balayant (10) présente une extension déterminée dans la direction (D) de l'axe de défilement du flux (F), avec des limites ou bords amont et aval (10'), et **en ce que** les moyens (5, 6) d'application et de focalisation sont configurés pour réaliser un confinement de l'éclairage tel que, pendant tout le déplacement du pixel mobile (10) sur ou au voisinage du plan de convoyage (3), les limites ou bords amont et aval de la zone d'éclairage (ZEF) selon la direction (D) de défilement sont toujours contenu(e)s à l'intérieur des limites ou bords amont et aval (10') dudit pixel (10) dans ladite direction (D) de défilement.

3. Machine selon la revendication 1 ou 2, **caractérisée en ce que** la forme du pixel mobile balayant (10) est déterminée par la forme des capteurs ou de l'arrangement de capteurs (15) faisant partie dudit au moins un dispositif (13, 14) d'acquisition et d'analyse et/ou par la forme de l'ouverture (13') d'admission de rayonnements réfléchis du dispositif (13) comprenant ces capteurs (15), ledit pixel (10) présentant préférentiellement une forme rectangulaire allongée dans la direction (D) de défilement.

4. Machine selon l'une quelconque des revendications 1 à 3, **caractérisée en ce que** la zone éclairée (10") du pixel mobile (10) pendant son déplacement de balayage le long de la ligne d'éclairage (8), c'est-à-dire sa surface commune avec la zone d'éclairage focalisée (ZEF), représente moins de 80 % de la superficie totale dudit pixel (10), et avantageusement au moins 30 %, préférentiellement au moins 40 %, de cette superficie.

5. Machine selon l'une quelconque des revendications 1 à 4, **caractérisée en ce que** les moyens d'application et de focalisation comprennent des moyens (6) de réflexion et de confinement des rayonnements issus de la ou des source(s) (5), ainsi que des moyens (16) d'arrêt des rayonnements émis directement par cette ou ces source(s) vers ledit plan de convoyage (3) et situés dans un secteur angulaire (18) déterminé, de sorte que la totalité des rayonnements (R) reçus sur le plan de convoyage (3) passe par le moyen de focalisation (6) et aboutit dans la zone d'éclairage focalisée (ZEF).

6. Machine selon l'une quelconque des revendications 1 à 5, **caractérisée en ce que** la fréquence de balayage définie par le moyen (9) de détection est réglable pour pouvoir être ajustée à la vitesse de défilement du flux (F) de telle manière que, durant le balayage de deux lignes successives, les zones d'éclairage confiné (ZEF) de chacune de ces lignes éclairent sur le plan de convoyage (3) en défilement des portions en forme de bandes transversales exactement contiguës dans la direction (D) de défilement, de manière à analyser au moins une fois tout point du flux (F) défilant.

7. Machine selon l'une quelconque des revendications 1 à 5, **caractérisée en ce que** la fréquence de balayage définie par le moyen (9) de détection est réglable pour pouvoir être ajustée à la vitesse de défilement du flux (F) de telle manière que, durant le balayage de deux lignes successives, les zones d'éclairage confiné (ZEF) de chacune de ces lignes éclairent sur le plan de convoyage (3) en défilement des surfaces en forme de bandes transversales qui sont soit séparées par une distance fixe et contrôlée, soit présentent un recouvrement sur une distance ou avec un taux fixe et contrôlé(e).

8. Machine selon l'une quelconque des revendications 1 à 7, **caractérisée en ce que** le moyen de détection (9) et les moyens (9, 11) de collecte et de transmission font partie d'un même arrangement optique correspondant à un poste de détection (4') et comprenant, d'une part, un miroir scanner (9) et au moins un élément focalisant (11) et configuré, d'autre part, pour collecter et transmettre l'image présente dans le pixel (10) à au moins un dispositif (13, 14) d'acquisition et d'analyse, avantageusement à travers une ouverture d'admission (13') en forme de fente rectangulaire.

9. Machine selon la revendication 8, **caractérisée en ce que** le miroir scanner (9) est un miroir polygonal multifacettes rotatif, dont la vitesse de rotation est réglable, l'élément focalisant (11) pouvant être de type réfractif, tel qu'une lentille, ou de type réfléchissant, tel qu'un miroir parabolique hors d'axe.

10. Machine selon l'une quelconque des revendications 1 à 9, **caractérisée en ce qu'**elle comprend au moins deux dispositifs d'acquisition (13) distincts, avantageusement de type différents, tels qu'un spectromètre de type NIR pour l'analyse des rayonnements proches infrarouge et un spectromètre de type VIS pour l'analyse des rayonnements visibles, un moyen optique (17) de subdivision du faisceau lumineux (12) des rayonnements réfléchis formant l'image contenue dans le pixel mobile balayant (10) en plusieurs faisceaux secondaires dirigés chacun vers un des dispositifs d'acquisition (13), par exemple du type filtre dichroïque.

11. Machine selon l'une quelconque des revendications 1 à 10, **caractérisée en ce que** le moyen de détection (9), les moyens (9, 11) de collecte et de transmission et ledit au moins un dispositif d'acquisition (13) et d'analyse (14) sont regroupés en une unité structurelle et fonctionnelle formant une tête de détection modulaire et correspondant à un poste de détection (4').

12. Machine selon l'une quelconque des revendications 1 à 11, **caractérisée en ce que** la ligne de focalisation des rayonnements confinés incidents (R), faisant partie du plan d'éclairage (7), est située à une distance (H) déterminée au-dessus du plan de convoyage (3), cette distance pouvant notamment être fonction de la taille moyenne des objets (2) à inspecter ou de l'épaisseur de la couche de produit(s) défilant(s).

13. Procédé d'inspection automatique d'objets individuels (2), arrangés de façon sensiblement monocouche, d'un produit surfacique d'un seul tenant ou de produits particulaires répartis en une couche sensiblement continue, défilant en flux (F) sur un plan de convoyage (3),
ledit procédé étant apte et destiné à réaliser une discrimination des objets, des produits ou de zones d'un produit surfacique selon leur composition chimique et/ou leur couleur et mettant en œuvre au moins un poste d'éclairage (4) et au moins un poste de détection (4') sous lesquels passe le flux (F) à inspecter,
ledit procédé consistant essentiellement à :
émettre, par l'intermédiaire de moyens (6) d'application et de focalisation, des rayonnements (R) d'inspection, issus d'une ou de plusieurs source(s) (5) incohérente(s) et à large spectre, ce en direction du plan de convoyage (3) de façon à définir un plan d'éclairage (7), l'intersection dudit plan d'éclairage (7) et du plan de convoyage (3) définissant une ligne d'éclairage (8) s'étendant transversalement à la direction (D) de défilement du flux (F), et créant une zone d'éclairage focalisé (ZEF) en forme de bande transversale, s'étendant de part et d'autre de ladite ligne d'éclairage (8) et dans le plan de convoyage (3),
à balayer, avec un moyen (9) de détection, périodiquement chaque point de la ligne d'éclairage (8), et à récupérer en permanence les rayonnements réfléchis par une zone de mesure élémentaire ou pixel (10) s'étendant autour du point courant balayé, ce pixel (10) mobile définissant, au cours du balayage de la ligne d'éclairage (8) par le moyen de détection (9), une zone de détection (ZD) en forme de bande transversale, cette zone (ZD) présentant une dimension (L) selon un axe perpendiculaire à la direction (D) de défilement, correspondant à la largeur d'inspection,
à collecter le faisceau (12) de rayonnements multispectraux réfléchis et à le transmettre à au moins un dispositif d'acquisition (13), relié à un dispositif d'analyse (14), par l'intermédiaire de moyens (9, 11) adaptés, et
à effectuer séquentiellement et répétitivement un traitement du signal contenu dans le pixel (10) et transmis par les moyens de collecte et de transmission (9, 11),
les différents moyens (5, 6, 9, 11, 13, 14) faisant tous partie d'au moins un poste d'éclairage (4) ou d'au moins un poste de détection (4'),
procédé **caractérisé**
**en ce que**, durant le déroulement des différentes étapes opérationnelles précitées, la zone d'éclairage focalisée (ZEF) est contenue dans la zone de détection (ZD) sur toute la largeur d'inspection (L).

14. Procédé selon la revendication 13, **caractérisé en ce qu'**il met en œuvre une machine (1) selon l'une quelconque des revendications 1 à 12.

## Patentansprüche

1. Maschine (1) zum automatischen Prüfen einzelner, im Wesentlichen einschichtig angeordneter Objekte (2) aus einem einstückigen Oberflächenprodukt oder aus teilchenförmigen Produkten, die in einer im wesentlichen kontinuierlichen Schicht verteilt sind und sich in einem Fluss (F) auf einer Förderebene (3) bewegen,
wobei die Maschine (1) einerseits in der Lage und dazu bestimmt ist, Objekte, Produkte oder Bereiche eines Oberflächenprodukts nach ihrer chemischen Zusammensetzung und/oder ihrer Farbe zu unterscheiden, und andererseits mindestens eine Beleuchtungsstation (4) und mindestens eine Detektionsstation (4') aufweist, unter denen der zu prüfende Fluss (F) hindurchgeht,
wobei die oder jede Beleuchtungsstation (4) insbesondere Mittel (6) zum Anwenden und Fokussieren von Inspektionsstrahlung (R) einer oder mehrerer inkohärenter und breitbandiger Quellen (5) umfasst, die die Strahlung (R) in Richtung der Förderebene (3) emittieren, um eine Beleuchtungsebene (7) zu definieren,
wobei der Schnittbereich der Beleuchtungsebene (7) und der Förderebene (3) eine sich quer zur Flussrichtung (D) des Flusses (F) erstreckende Beleuchtungslinie (8) sowie eine fokussierte Beleuchtungszone (ZEF) in Form eines Querstreifens definiert, die sich zu beiden Seiten der Beleuchtungslinie (8) und in der Förderebene (3) erstreckt,
wobei die oder jede Detektionsstation (4') insbesondere einerseits ein Detektionsmittel (9) umfasst, das es ermöglicht, jeden Punkt der Beleuchtungslinie (8) periodisch abzutasten, und das permanent die Strahlung empfängt, die von einer Elementar- oder Pixelmesszone (10) reflektiert wird, die sich um den aktuellen abgetasteten Punkt herum erstreckt,
wobei diese bewegliche Elementar- oder Pixelmesszone (10) bei der Abtastung der Beleuchtungslinie (8) durch die Detektionsmittel (9) eine Erfassungszone (ZD) in Form eines Querstreifens definiert, wobei diese Erfassungszone (ZD) eine Breite (L) entlang einer zur Flussrichtung (D) senkrechten Achse aufweist, die der Prüfbreite der Detektionsstation (4') entspricht, und andererseits Mittel (9, 11) umfasst sind zum Erfassen und Übertragen des Strahls (12) reflektierter multispektraler Strahlung zu mindestens einer Erfassungsvorrichtung (13), die mit einer Analysevorrichtung (14) verbunden ist, die in der Lage und dazu bestimmt ist, die Verarbeitung des in der Elementar- oder Pixelmesszone (10) enthaltenen Signals durchzuführen, welches durch die Mittel (9, 11) zum Erfassen und Übertragen übermittelt wird,
**dadurch gekennzeichnet,**
**dass** die fokussierte Beleuchtungszone (ZEF) über die gesamte Breite (L) in der Erfassungszone (ZD) enthalten ist.

2. Maschine nach Anspruch 1,
**dadurch gekennzeichnet,**
**dass** die Elementar- oder Pixelmesszone (10) eine definierte Ausdehnung in Flussrichtung (D) des Flusses (F) aufweist, mit flussaufwärts und flussabwärts liegenden Begrenzungen oder Kanten (10'), und dass die Mittel (5, 6) zum Anwenden und Fokussieren so konfiguriert sind, dass eine Eingrenzung der Beleuchtung erreicht wird, so dass während der gesamten Verschiebung der Elementar- oder Pixelmesszone (10) auf oder in der Nähe der Förderebene (3) die in Flussrichtung (D) flussaufwärts und flussabwärts liegenden Begrenzungen oder Kanten der fokussierten Beleuchtungszone (ZEF) stets innerhalb seiner in Flussrichtung (D) flussaufwärts und flussabwärts liegenden Begrenzungen oder Kanten (10') umfasst sind.

3. Maschine nach Anspruch 1 oder 2,
**dadurch gekennzeichnet,**
**dass** die Form der Elementar- oder Pixelmesszone (10) durch die Form der Sensoren oder die Anordnung der Sensoren (15), die Teil der mindestens einen Erfassungs- und Analysevorrichtung (13, 14) sind, und/oder durch die Form der Öffnung (13') für den Eintritt der reflektierten Strahlung der diese Sensoren (15) enthaltenden Vorrichtung (13) bestimmt wird, wobei die Elementar- oder Pixelmesszone (10) vorzugsweise eine rechteckige, in der Flussrichtung (D) verlängerte Form aufweist.

4. Maschine nach einem der Ansprüche 1 bis 3,
**dadurch gekennzeichnet,**
**dass** der beleuchtete Bereich (10") der Elementar- oder Pixelmesszone (10) während seiner Abtastbewegung entlang der Beleuchtungslinie (8), d.h. sein gemeinsamer Bereich mit der fokussierten Beleuchtungszone (ZEF), weniger als 80% der Gesamtfläche der Elementar- oder Pixelmesszone (10) beträgt, und vorteilhafterweise mindestens 30 %, vorzugsweise mindestens 40 %, dieser Fläche.

5. Maschine nach einem der Ansprüche 1 bis 4,
**dadurch gekennzeichnet,**
**dass** die Mittel (6) zum Anwenden und Fokussieren Mittel (6) zum Reflektieren und Begrenzen der von der (den) Quelle(n) (5) kommenden Strahlung, sowie Mittel (16) zum Beenden der direkt von dieser Quelle oder diesen Quellen in Richtung der Förderebene (3) emittierten Strahlung umfassen, die in einem bestimmten Winkelbereich (18) angeordnet sind, so dass die gesamte auf der Förderebene (3) empfangene Strahlung (R) die Mittel (6) zum Fokussieren durchläuft und in der fokussierten Beleuchtungszone (ZEF) endet.

6. Maschine nach einem der Ansprüche 1 bis 5,
**dadurch gekennzeichnet,**
**dass** die durch das Detektionsmittel (9) definierte Abtastfrequenz derart einstellbar ist auf die Laufgeschwindigkeit des Flusses (F), dass bei der Abtastung zweier aufeinanderfolgender Zeilen die fokussierten Beleuchtungszonen (ZEF) jeder dieser Zeilen auf der sich bewegenden Förderebene (3) Abschnitte in Form von in Flussrichtung (D) genau aneinander grenzenden Querstreifen beleuchten, um mindestens einmal jeden Punkt des sich bewegenden Flusses (F) zu analysieren.

7. Maschine nach einem der Ansprüche 1 bis 5,
**dadurch gekennzeichnet,**
**dass** die durch das Detektionsmittel (9) zum Erfassen definierte Abtastfrequenz so auf die Laufgeschwindigkeit des Flusses (F) einstellbar ist, dass sie während der Abtastung zweier aufeinander folgender Zeilen die fokussierten Beleuchtungszonen (ZEF) jeder dieser Zeilen auf den Oberflächen der bewegten Förderebene (3) in Form von Querstreifen abtasten, die entweder durch einen festen und kontrollierten Abstand getrennt sind oder eine Überlappung über einen festen und kontrollierten Abstand oder eine Überlappung mit einem festen und kontrollierten Prozentsatz aufweisen.

8. Maschine nach einem der Ansprüche 1 bis 7,
**dadurch gekennzeichnet,**
**dass** die Detektionsmittel (9) und die Mittel (9, 11) zum Erfassen und Übertragen Teil derselben optischen Anordnung sind, die einer Detektionsstation (4') entspricht und einerseits einen Scannerspiegel (9) und mindestens ein Fokussierungselement (11) umfasst, andererseits zum Erfassen und Übertragen des in der Elementar- oder Pixelmesszone (10) vorhandenen Bildes zu mindestens einer Erfassungs- und Analysevorrichtung (13, 14), vorzugsweise eine rechteckige schlitzförmige Einlassöffnung (13') umfasst.

9. Maschine nach Anspruch 8,
**dadurch gekennzeichnet,**
**dass** der Scannerspiegel (9) ein drehbarer, facettenreicher Polygonspiegel ist, dessen Drehgeschwindigkeit einstellbar ist, wobei das Fokussierungslement (11) vom brechenden Typ, wie eine Linse, oder vom reflektierenden Typ, wie ein außeraxialer Parabolspiegel, sein kann.

10. Maschine nach einem der Ansprüche 1 bis 9,
**dadurch gekennzeichnet,**
**dass** diese mindestens zwei Erfassungsvorrichtungen (13) vorteilhafterweise verschiedener Typen umfasst, wie ein Spektrometer des NIR-Typs für die Analyse von Nah-Infrarot-Strahlung und ein Spektrometer des VIS-Typs für die Analyse von sichtbarer Strahlung, ein optisches Mittel (17) zum Unterteilen des Strahls (12) der reflektierten Strahlung, die das in der abgetasteten Elementar- oder Pixelmesszone (10) enthaltene Bild in mehreren Sekundärstrahlen jeweils auf eine der Erfassungsvorrichtungen (13) richtet, wobei diese zum Beispiel einen dichroitischen Filter umfassen können.

11. Maschine nach einem der Ansprüche 1 bis 10,
**dadurch gekennzeichnet,**
**dass** die Detektionsmittel (9), die Mittel (9, 11) zum Erfassen und Übertragen und die mindestens eine Erfassungs- (13) und Analysevorrichtung (14) in einer strukturellen und funktionellen Einheit zusammengefasst sind und einen modularen Detektionskopf bilden und einer Detektionsstation entsprechen.

12. Maschine nach einem der Ansprüche 1 bis 11,
**dadurch gekennzeichnet,**
**dass** die Strahltaille der einfallenden umfassten Strahlung (R), die einen Teil der Beleuchtungsebene (7) bildet, in einem Abstand von (H), der oberhalb der Förderebene (3) bestimmt wird, wobei dieser Abstand insbesondere von der durchschnittlichen Größe der zu prüfenden Objekte (2) oder von der Dicke der durchlaufenden Schicht(en) abhängen kann, eingegrenzt wird.

13. Verfahren zum automatischen Prüfen von im Wesentlichen einschichtig angeordneten einzelnen Objekten (2) aus einem einstückigen Oberflächenprodukt oder aus teilchenförmigen Produkten, die in einer im Wesentlichen kontinuierlichen Schicht verteilt sind und sich in einem Fluss (F) auf einer Förderebene (3) bewegen,
wobei das Verfahren in der Lage und dazu bestimmt ist zur Unterscheidung von Objekten, Produkten oder Bereichen eines Oberflächenprodukts nach ihrer chemischen Zusammensetzung und/oder Farbe unter Verwendung mindestens einer Beleuchtungsstation (4) und mindestens einer Detektionsstation (4'), unter der der zu prüfende Fluss (F) hindurchgeht, wobei das Verfahren im Wesentlichen umfasst:
Emission einer Inspektionsstrahlung (R) durch Mittel (6) zum Anwenden und Fokussieren von einer oder mehreren inkohärenten Quelle(n) (5) mit breitem Spektrum, in Richtung der Förderebene (3), um eine Beleuchtungsebene (7) zu definieren, wobei der Schnittbereich der Beleuchtungsebene (7) und der Förderebene (3) eine Beleuchtungslinie (8) definiert, die sich quer zur Flussrichtung (D) des Flusses (F) erstreckt, und eine fokussierte Beleuchtungszone (ZEF) in Form eines Querstreifens erzeugt, die sich zu beiden Seiten der Beleuchtungslinie (8) und in der Förderebene (3) erstreckt, um mit einem Detektionsmittel (9) periodisch jeden Punkt der Beleuchtungslinie (8) abzutasten und die von einer Elementar- oder Pixelmesszone (10), die sich um den aktuellen abgetasteten Punkt herum erstreckt, reflektierte Strahlung permanent zu erfassen, wobei diese Elementar- oder Pixelmesszone (10) bei der Abtastung der Beleuchtungslinie (8) durch das Detektionsmittel (9) eine Erfassungszone (ZD) in Form eines Querstreifens definiert, wobei diese Erfassungszone (ZD) eine der Prüfbreite entsprechende Abmessung (L) entlang einer zur Flussrichtung (D) senkrechten Achse aufweist, um den Strahl (12) der reflektierten multispektralen Strahlung zu erfassen und über geeignete Mittel (9, 11) an mindestens eine mit einer Analysevorrichtung (14) verbundene Erfassungsvorrichtung (13) zu übertragen, und um sequentiell und wiederholt eine Verarbeitung des in der Elementar- oder Pixelmesszone (10) enthaltenen und von den Mitteln (9, 11) zum Erfassen und Übertragen übertragenen Signals durchzuführen, wobei die verschiedenen Mittel (5, 6, 9, 11, 13, 14) alle Teil mindestens einer Beleuchtungsstation (4) oder mindestens einer Detektionsstation (4') sind,
**dadurch gekennzeichnet,**
**dass** im Verlauf der vorgenannten einzelnen Arbeitsschritte der Bereich der fokussierten Beleuchtungszone (ZEF) über die gesamte Prüfbreite (L) innerhalb der Erfassungszone (ZD) enthalten ist.

14. Verfahren nach Anspruch 13,
**dadurch gekennzeichnet,**
**dass** eine Maschine (1) nach einem der Ansprüche 1 bis 12 umfasst wird.

## Claims

1. Machine (1) for the automatic inspection of individual objects (2), arranged essentially in a single layer, of a one piece surface product or particular products distributed in an essentially continuous layer, travelling in a flow (F) on a conveying plane (3), said machine (1) being on the one hand able and designed to distinguish objects, products or regions of a surface product according to their chemical composition and/or their colour and comprising on the other hand at least one lighting station (4) and at least one detection station (4') below which the flow (F) to be inspected passes,
the or each lighting station (4) comprising means (6) for the application and focusing of inspection radiation (R), obtained from one or more incoherent and broad-spectrum source(s) (5), emitting said radiation (R) in the direction of the conveying plane (3) in such a way as to define an lighting plane (7), the intersection of said lighting plane (7) and conveying plane (3) defining an lighting line (8) that extends transversely to the direction (D) of travel of the flow (F), as well as a focused lighting zone (ZEF) in the form of a transverse strip, extending on both sides of said lighting line (8) and in the conveying plane (3),
the or each detection station (4') comprising in particular
on the one hand a detection means (9) that makes it possible to periodically scan each point of the lighting line (8) and that continuously receives radiation that is reflected by an elementary measurement zone or pixel (10) that extends around the current scanned point, wherein this movable pixel (10) defines during the scanning of the lighting line (8) by the detection means (9), a detection zone (ZD) in the form of a transverse strip, said zone (ZD) having a dimension (L) along an axis that is perpendicular to the direction (D) of travel, corresponding to the inspection width of the detection station (4'), and
on the other hand means (9, 11) for collecting and transmitting the multi-spectral radiation beam (12) reflected to at least one acquisition device (13), connected to an analysis device (14), able and designed to process the signal that is contained in the pixel (10) and transmitted by the collecting and transmission means (9, 11),
the machine (10 being **characterised in that** the focused lighting zone (ZEF) is contained in the detection zone (ZD) over the entire width (L).

2. Machine according to claim 1, **characterised in that** the scanning movable pixel (10) has an extension determined in the direction (D) of the axis of travel of the flow (F), with upstream and downstream limits or edges (10'), and wherein the application and focusing means (5, 6) are configured to carry out a confinement of the lighting such that, during the entire movement of the movable pixel (10) on or in the vicinity of the conveying plane (3), the upstream and downstream limits or edges of the lighting zone (ZEF) in the direction (D) of travel are always contained inside the upstream and downstream limits or edges (10') of said pixel (10) in said direction (D) of travel.

3. Machine according to claim 1 or 2, **characterised in that** the form of the scanning movable pixel (10) is determined by the form of the sensors or the arrangement of the sensors (15) that are part of said at least one acquisition and analysis device (13, 14) and/or by the form of the opening (13') for the intake of reflected radiation from the device (13) that comprises these sensors (15), said pixel (10) preferably having a rectangular form extending in the direction (D) of travel.

4. Machine according to any of claims 1 to 3, **characterised in that** the illuminated region (10") of the movable pixel (10) during its scanning movement along the lighting line (8), i.e. its common surface with the focused lighting zone (ZEF), represents less than 80% of the total surface of said pixel (10) and advantageously at least 30%, preferably at least 40% of this surface.

5. Machine according to any of claims 1 to 4, **characterised in that** the application and focusing means comprise means (6) for the reflection and confinement of the radiation that is obtained from the source(s) (5), as well as means (16) for stopping the radiation that is emitted directly by this or these source(s) toward said conveying plane (3) and located in a determined angular sector (18), in such a way that all of the radiation (R) received on the conveying plane (3) passes via the focusing means (6) and ends in the focused lighting zone (ZEF).

6. Machine according to any of claims 1 to 5, **characterised in that** the scanning frequency that is defined by the detection means (9) can be regulated so as to be adjusted to the travel speed of the flow (F) in such a way that, during the scanning of two successive lines, the confined lighting zones (ZEF) of each of these lines illuminate over the travelling conveying plane (3) portions in the form of transverse strips that are exactly contiguous in the direction (D) of travel, in such a way as to analyse at least once every point of the travelling flow (F).

7. Machine according to any of claims 1 to 5, **characterised in that** the scanning frequency defined by the detection means (9) can be regulated to be able to be adjusted to the travel speed of the flow (F) in such a way that during the scanning of two successive lines, the confined lighting zones (ZEF) of each of these lines illuminate over the travelling conveying plane (3) surfaces in the form of transverse strips that are either separated by a set and monitored distance or that have a coverage over a distance or with a set and monitored level.

8. Machine according to any of claims 1 to 7, **characterised in that** the detection means (9) and the collecting and transmission means (9, 11) are part of the same optical arrangement corresponding to a detection station (4') and comprising on the one hand a scanner mirror (9) and at least one focusing element (11) and configured on the other hand to collect and to transmit the image that is present in the pixel (10) to at least one acquisition and analysis device (13, 14) advantageously through an intake opening (13') in the form of a rectangular slot.

9. Machine according to claim 8, **characterised in that** the scanner mirror (9) is a rotating multi-faceted polygonal mirror, the speed of rotation of which can be regulated, the focusing element (11) being able to be of the refractory type, such as a lens, or of the reflecting type, such as an off-axis parabolic mirror.

10. Machine according to any of claims 1 to 9, **characterised in that** it comprises at least two separate acquisition devices (13), advantageously of different types, such as an NIR-type spectrometer for the analysis of near-infrared radiation and a VIS-type spectrometer for the analysis of visible radiation, an optical means (17) for subdivision of the light beam (12) of the reflected radiation, forming the image that is contained in the scanning movable pixel (10) into several secondary beams that are each directed toward one of the acquisition devices (13) of the dichroic filter type.

11. Machine according to any of claims 1 to 10, **characterised in that** the detection means (9), the collecting and transmission means (9, 11) and said at least one acquisition device (13) and analysis device (14) are grouped into one structural and operational unit that forms a modular detection head and that corresponds to a detection station (4').

12. Machine according to any of claims 1 to 11, **characterised in that** the line for focusing the incident confined radiation (R), forming part of the lighting plane (7), is located at a determined distance (H) above the conveying plane (3), wherein this distance is based on the average size of the objects (2) that are to be inspected or the thickness of the layer of travelling product(s).

13. Method for automatic inspection of individual objects (2), arranged essentially in a single layer, of a one-piece surface product or particular products distributed in an essentially continuous layer, travelling in a flow (F) over a conveying plane (3),
said method being able and designed to distinguish objects, products or zones of a surface product according to their chemical composition and/or their colour, and using at least one lighting station (4) and at least one detection station (4') under which the flow (F) that is to be inspected passes,
said method essentially consisting of:
emitting, by means of application and focusing means (6), inspection radiation (R), obtained from one or more incoherent and broad-spectrum source(s) (5), in the direction of the conveying plane (3) in such a way as to define an lighting plane (7), the intersection of said lighting plane (7) and the conveying plane (3) defining an lighting line (8) that extends transversely to the direction (D) of travel of the flow (F) and creating a focused lighting zone (ZEF) in the form of a transverse strip, extending on both sides of said lighting line (8) and in the conveying plane (3),
periodically scanning, with a detection means (9), each point of the lighting line (8), and continuously recovering the radiation that is reflected by an elementary measurement region or pixel (10) extending around the current scanned point, this movable pixel (10) defining during the scanning of the lighting line (8) by the detection means (9) a detection zone (ZD) in the form of a transverse strip, said region (ZD) having a dimension (L) along an axis that is perpendicular to the direction (D) of travel, corresponding to the inspection width,
collecting the beam (12) of reflected multi-spectral radiation and transmitting it to at least one acquisition device (13), connected to an analysis device (14), by means of adapted means (9, 11), and
sequentially or repetitively carrying out a processing of the signal that is contained in the pixel (10) and transmitted by the collecting and transmission means (9, 11),
the various means (5, 6, 9, 11, 13, 14) all forming part of at least one lighting station (4) or at least one detection station (4'),
the method being **characterised**
**in that** during the course of the various aforementioned operational steps, the focused lighting zone (ZEF) is contained in the detection zone (ZD) over the entire inspection width (L).

14. Method according to claim 13, **characterised in that** it uses a machine (1) according to any of claims 1 to 12.
